# EUROPEAN PATENT APPLICATION

(11) **EP 4 763 005 A1**
(43) Date of publication of application: **24.06.2026**
(21) Application number: 25206551.1
(22) Date of filing: 03.10.2025
(51) Int. Cl.: A47J 31/40

(54) **A COFFEE MAKER WITH AUTOMATIC DOSING FUNCTION**

(30) Priority: 20.12.2024 TR 2024019897
(71) Applicant: Arçelik Anonim Sirketi, 34445 Istanbul (TR)
(72) Inventor: YAYLA, SONAT, 34445 Istanbul (TR); YULDASHOV, BAYRAM, 34445 Istanbul (TR); MUTLU, EREN, 34445 Istanbul (TR); KESKIN, EGE, 34445 Istanbul (TR); OZTEKIN, YUNUS, 34445 Istanbul (TR)

(57) **Abstract**

The present invention relates to a coffee maker (1) with automatic dosing function. The coffee maker (1) comprises a body (2); a dosing compartment (3) which is provided in the body (2); a coffee dosing group (4) which is provided in the dosing compartment (3) and which is configured to store coffee and to dose the appropriate amount of coffee depending on the user's selection; a brewing chamber (5) which is provided in the body (2) and wherein the brewing process is performed; and a transfer opening (6) which enables the foodstuff transfer between the coffee dosing group (4) and the brewing chamber (5).

## Description

The present invention relates to a coffee maker with automatic dosing function.

Since in coffee makers where coffee and sugar are added to the brewing pot by the user, the amount of coffee to be brewed is measured manually by the user, inconsistencies may occur in the amount of coffee and sugar. Moreover, adjusting the appropriate amount of coffee and sugar causes waste of time. In beverages prepared in fully automatic coffee makers, coffee and sugar are stored in receptacles. In an automatic coffee maker, coffee and optionally sugar should be automatically transferred to the brewing chamber where the brewing process is performed.

In the coffee makers, the correct amount of coffee ensures a balanced emergence of aromatic components and flavor profile. However, while the coffee makers aim to offer the same taste and quality in every cup by applying a fixed brewing algorithm, dosing errors disrupt this consistency and result in undesirable changes in the taste of the coffee. The users dose ground coffee and sugar manually with a measuring spoon. Although they use the same measuring spoon, the precision of manual dosing varies from user to user and is generally low. These variations and the low dosing precision lead to noticeable changes in the taste of the coffee.

In the state of the art United States Patent Application No. US20170258262A1, an automatic coffee maker is disclosed.

Therefore, there is a need in the state of the art for a coffee maker which ensures the precise and automatic dosing of coffee and sugar according to user preferences.

The aim of the present invention is the realization of a coffee maker which ensures the precise and automatic dosing of coffee and sugar according to user preferences.

The coffee maker realized in order to attain the aim of the present invention, explicated in the first claim and the respective claims thereof, comprises a body; a dosing compartment which is provided in the body; at least one coffee dosing group which is provided in the dosing compartment so as to store coffee therein and to precisely dose the amount of coffee according to the user preference; a brewing chamber which is provided in the body so as to receive the dosed coffee from the coffee dosing group and to perform the brewing process; at least one transfer opening which extends between the dosing compartment and the brewing chamber so as to allow foodstuff transfer; and at least one sugar dosing group which is provided in the dosing compartment so as to store sugar therein and to precisely dose the amount of sugar into the brewing chamber according to the user preference. After the number of cups of coffee to be brewed and the amount of sugar are entered, for example, via an input unit provided on the body, the coffee dosing group transfers the amount of coffee suitable for the desired number of cups into the brewing chamber through the transfer opening, while the sugar dosing group transfers the amount of sugar suitable for the desired sugar level in the coffee to be brewed into the brewing chamber through the transfer opening. After the transfer of coffee and sugar to the brewing chamber is completed, the brewing process is performed, and the desired number of cups of coffee with the desired sugar ratio is prepared. In an example, the brewing process is performed in a pot placed in the brewing chamber, while in another embodiment, the brewing process is performed in a built-in brewer integrated into the brewing chamber, and after the brewing process is completed, the coffee is automatically dispensed into a mug or cup placed in the brewing chamber. Thus, the coffee and sugar in the desired amounts based on the user preference are simultaneously transferred into the brewing pot, and the brewing process performed in the brewing chamber allows for the preparation of coffee with the desired taste and in the desired number within a short period of time.

In an embodiment of the present invention, the coffee dosing group comprises a coffee receptacle wherein the coffee is stored; at least one transfer receptacle which is movable between a first position wherein the transfer receptacle opens to the coffee receptacle and a second position wherein the transfer receptacle opens to the transfer opening, and which defines a volume allowing a certain amount of coffee from the coffee receptacle to fill therein in the first position; at least one shutter which is movable between a first position which allows coffee to pass into the transfer opening and a closed position which prevents coffee from passing into the transfer opening; and at least one first drive group which provides the necessary force to move the transfer receptacle between the first and second positions and to move the shutter between the open and closed positions. The coffee receptacle is filled with coffee by the user, and when the transfer receptacle arranged in the vicinity of the base of the coffee receptacle is in the first position, a certain amount of coffee suitable for brewing one cup, for example, fills into the transfer receptacle by the effect of gravity. After the number of cups of coffee to be brewed is entered via the input unit, the transfer receptacle is moved between the first and second positions the required number of times to transfer the amount of coffee suitable for the desired number of cups into the brewing chamber, and when the transfer receptacle reaches the second position, the shutter moves into the open position, and the coffee contained in the volume of the transfer receptacle is enabled to be transferred into the brewing chamber through the transfer opening. Since the amount of coffee the transfer receptacle can hold is determined, the amount of coffee transferred to the brewing chamber matches the number of cups to be brewed, ensuring that the taste of the coffee remains nearly the same regardless of the number of cups brewed, increasing user satisfaction.

In an embodiment of the present invention, the first drive group comprises at least one first drive member which provides the necessary force for moving the transfer receptacle between the first position and the second position and for moving the shutter between the open position and the closed position; and at least one transmission group which transmits the force provided by the first drive member to the transfer receptacle and the shutter such that the transfer receptacle is moved between the first and second positions and the shutter is moved between the open and closed positions.

In an embodiment of the present invention, the transmission group comprises a first gearwheel which is coupled with the first drive member and the transfer receptacle in order to transmit the force provided by the first drive member to the transfer receptacle such that transfer receptacle performs a rotational movement between the first and second positions, and a second gearwheel which is coupled with the first gearwheel and the shutter in order to transmit the force provided by the first drive member to the shutter such that the shutter performs a rotational movement between the open and closed positions.

In an embodiment of the present invention, the transmission group further comprises a third gearwheel which is provided on the second gearwheel so as to perform a synchronous rotational movement with the second gearwheel, and at least one shutter arm which is connected to the shutter at one end and connected to the third gearwheel via teeth suitable for meshing with the third gearwheel.

In an embodiment of the present invention, the coffee dosing group comprises a protrusion which is arranged on the first gearwheel so as to extend outwardly from the first gearwheel, and at least one first switch which is arranged so as to contact the protrusion at a certain position during the movement of the first gearwheel.

In an embodiment of the present invention, the coffee dosing group comprises at least one mixer which is arranged in the coffee receptacle so as to perform a rotational movement around an axis of extension, and a second drive group which is configured to rotate the mixer.

In an embodiment of the present invention, the second drive group comprises at least one second drive member which provides the necessary force to rotate the mixer, and at least one holder which transmits the force provided by the second drive member to the mixer so as to enable the mixer to perform a rotational movement.

In an embodiment of the present invention, the mixer is removably attached to the holder.

In an embodiment of the present invention, the coffee dosing group comprises at least one first sensor which is configured to detect the amount of coffee dispensed from the transfer receptacle to the transfer opening.

In an embodiment of the present invention, the coffee dosing group comprises at least one coffee receptacle lid which covers the coffee receptacle so as to isolate the interior of the coffee receptacle from the external environment.

In an embodiment of the present invention, the sugar dosing group comprises a sugar receptacle wherein the sugar is stored; a delivery body which is positioned below the sugar receptacle so as to extend between a first end, into which a portion of the sugar in the sugar receptacle is filled by gravity, and a second end, which enables the sugar to be transferred to the transfer opening; and at least one sugar delivery group which is arranged in the delivery body for moving the sugar from the first end toward the second end.

In an embodiment of the present invention, the sugar delivery group comprises a shaft which extends linearly in the delivery body from approximately the first end of the delivery body to approximately the second end and has protrusions arranged thereon to form a helical structure; a third drive member which provides the necessary force for rotating the shaft around its axis of extension; and at least one bearing member which enables one end of the shaft to be borne to the third drive member such that the shaft is enabled to perform a rotational movement around its axis of extension by the force provided by the third drive member.

In an embodiment of the present invention, the sugar dosing group comprises a protrusion which is arranged on the bearing member so as to extend outwardly from the bearing member, and at least one second switch which is arranged to contact the protrusion at a certain position while the bearing member, and hence the shaft, is rotating.

In an embodiment of the present invention, the sugar dosing group comprises at least one second sensor which is configured to detect the amount of sugar in the sugar receptacle.

In an embodiment of the present invention, the sugar dosing group comprises at least one sugar receptacle lid which covers the sugar receptacle so as to isolate the interior of the sugar receptacle from the external environment.

In an embodiment of the present invention, the coffee maker is a Turkish coffee maker.

By means of the present invention, a coffee maker is realized, which improves user satisfaction by ensuring the automatic transfer of the amount of coffee corresponding to the number of cups selected by the user and the amount of sugar corresponding to the sugar ratio selected by the user to the brewing chamber via a coffee dosing group and a sugar dosing group.

The coffee maker realized to attain the aim of the present invention is illustrated in the attached figure, where:

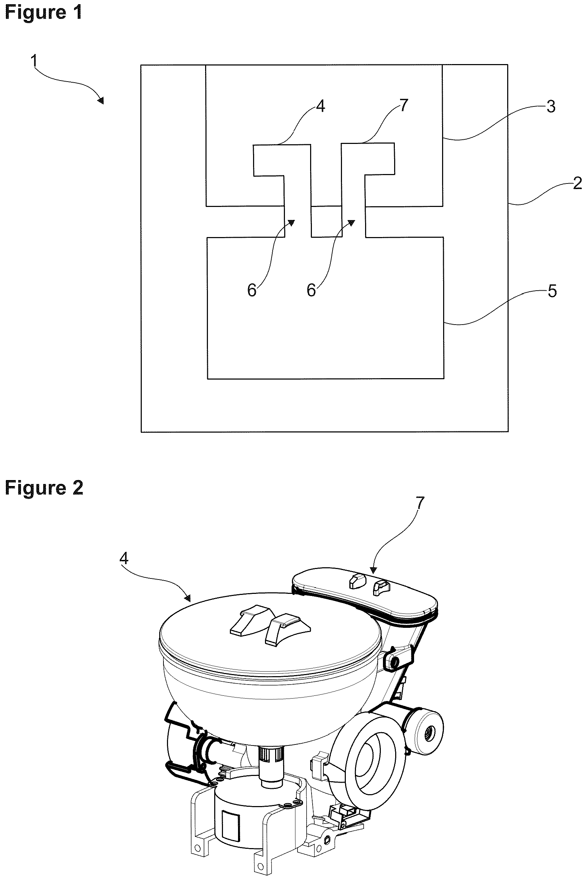

Figure 1 - is the schematic view of the coffee maker related to an embodiment of the present invention.
Figure 2 - is the perspective view of the coffee dosing group and the sugar dosing group provided in the coffee maker related to an embodiment of the present invention.

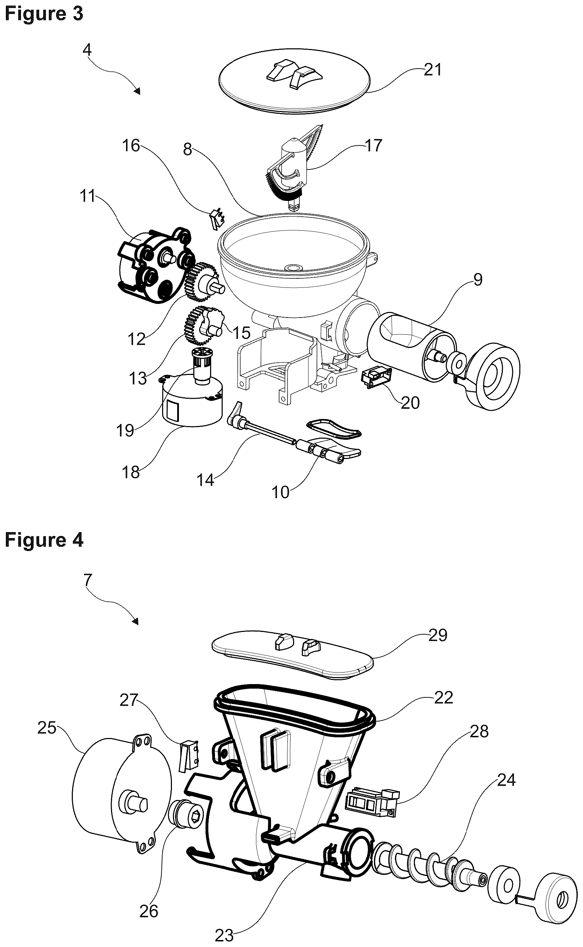

Figure 3 - is the exploded perspective view of the coffee dosing group provided in the coffee maker related to an embodiment of the present invention.
Figure 4 - is the exploded perspective view of the sugar dosing group provided in the coffee maker related to an embodiment of the present invention.

The elements illustrated in the figures are numbered as follows:
1. Coffee maker
2. Body
3. Dosing compartment
4. Coffee dosing group
5. Brewing chamber
6. Transfer opening
7. Sugar dosing group
8. Coffee receptacle
9. Transfer receptacle
10. Shutter
11. First drive member
12. First gearwheel
13. Second gearwheel
14. Shutter arm
15. Third gearwheel
16. First switch
17. Mixer
18. Second drive member
19. Holder
20. First sensor
21. Coffee receptacle lid
22. Sugar receptacle
23. Delivery body
24. Shaft
25. Third drive member
26. Bearing member
27. Second switch
28. Second sensor

The coffee maker (1) comprises a body (2); a dosing compartment (3) which is provided in the body (2); a coffee dosing group (4) which is provided in the dosing compartment (3) and which is configured to store coffee and to dose the appropriate amount of coffee depending on the user's selection; a brewing chamber (5) which is provided in the body (2) and wherein the brewing process is performed; and a transfer opening (6) which enables the foodstuff transfer between the coffee dosing group (4) and the brewing chamber (5). The coffee dosing group (4) is positioned above the brewing chamber (5). A dose of coffee corresponding to the amount selected by the user is transferred from the coffee dosing group (4) to the brewing chamber (5) through the transfer opening (6). In an exemplary embodiment, by means of a pot placed into the brewing chamber (5), the brewing process is performed in the pot, and in another exemplary embodiment, the brewing process is performed directly in the brewing chamber (5), and the brewed coffee is poured directly into a cup or a glass.

The coffee maker (1) of the present invention comprises a sugar dosing group (7) which is provided in the dosing compartment (3) and which is configured to store sugar and to dose the amount of sugar specified by the user to the brewing chamber (5) through the transfer opening (6). The sugar dosing group (7) may be arranged separately from the coffee dosing group (4) in the dosing compartment (3), or may be integrated with the coffee dosing group (4). The amount of sugar corresponding to the amount of sugar selected by the user via an input unit provided on the body (2) is transferred to the brewing chamber (5) with high precision by the sugar dosing group (7) so as to ensure that the brewing process is performed by using the amount of sugar desired by the user.

In an embodiment of the present invention, the coffee dosing group (4) comprises a coffee receptacle (8) which stores the coffee therein; a transfer receptacle (9) which faces the coffee receptacle (8) in a first position and the transfer opening (6) in a second position and which is capable of holding a certain amount of coffee therein; a shutter (10) which can move between an open position which allows the coffee in the transfer receptacle (9) to pass to the transfer opening (6), and a closed position which prevents the coffee in the transfer receptacle (9) from passing to the transfer opening (6); and a first drive group which is configured to move the transfer receptacle (9) between the first position and the second position, and the shutter (10) between the closed position and the open position. The coffee to be brewed is filled into the coffee receptacle (8) by the user. The transfer receptacle (9) is arranged, for example, at the bottom or just below the coffee receptacle (8), and a certain amount of coffee from the coffee receptacle (8) flows into the transfer receptacle (9) under the effect of gravity. For example, in a coffee maker (1) which brews Turkish coffee, the transfer receptacle (9) has a volume sufficient to hold the amount of coffee required to brew one cup of coffee. Based on the number of cups requested by the user via an input unit provided on the body (2), the transfer receptacle (9) is moved between the first position and the second position by the first drive group. In an embodiment where the transfer receptacle (9) has a volume sufficient to brew one cup of coffee, when the user requests a single cup of coffee, one unit of coffee required for brewing one cup of coffee is transferred to the brewing chamber (5) via the transfer opening (6) by moving the transfer receptacle (9) once from the first position to the second position and setting the shutter (10) to the open position.

When the user requests two cups of coffee, two units of coffee required for brewing two cups of coffee are transferred to the brewing chamber (5) via the transfer opening (6) by moving the transfer receptacle (9) twice from the first position to the second position and setting the shutter (10) to the open position. In an embodiment of the present invention, after it is determined that the amount of coffee in the transfer receptacle (9) has been transferred to the brewing chamber (5), the transfer receptacle (9) in the second position is automatically returned to the first position by the first drive group, and the shutter (10) in the open position is returned to the closed position. Thus, when the coffee maker (1) is not in use, the air is not allowed to enter the dosing compartment (3) through the transfer opening (6) and the coffee or other foodstuffs in the dosing compartment (3) are prevented from becoming stale. Moreover, undesirable substances such as dust, dirt or water are prevented from entering the dosing compartment (3). Depending on the movement of the transfer receptacle (9) of the coffee dosing group (4), which has a defined capacity for receiving coffee, from the first position to the second position, it becomes possible to transfer the amount of coffee corresponding to the number of cups the user wishes to brew from the coffee receptacle (8) to the brewing chamber (5) with high precision. Thus, the desired number of cup of coffees by the user is brewed with the desired taste, thereby improving user satisfaction.

In an embodiment of the present invention, the first drive group comprises at least one first drive member (11) which provides the power required for the respective movements of the transfer receptacle (9) and the shutter (10), and at least one transmission group which transmits the power provided by the first drive member (11) to the transfer receptacle (9) and the shutter (10). In a version of this embodiment, the first drive group comprises two distinct first drive members (11), such as electric motors, which operate independently but in synchronization to move the transfer receptacle (9) and the shutter (10) between their respective positions, and one of the said first drive members (11) is connected to the transfer receptacle (9) via a first transmission group, and the other is connected to the shutter (10) via a second transmission group. In this version, the use of different first drive members (11) which can individually move the transfer receptacle (9) and the shutter (10) offers the advantage of using low-capacity drive members (11), thereby reducing both the weight and the cost of the coffee maker (1). In another version of this embodiment, the first drive group comprises a single first drive member (11), such as an electric motor, which is configured to move both the transfer receptacle (9) and the shutter (10) between their respective positions, and the said first drive member (11) is connected to both the transfer receptacle (9) and the shutter (10) via a transmission group so as to move the transfer receptacle (9) and the shutter (10) simultaneously. In this version, the use of a single first drive member (11) which can simultaneously move the transfer receptacle (9) and the shutter (10) enables the transfer receptacle (9) and the shutter (10) to be simultaneously moved without any issues of synchronization during operation.

In an embodiment of the present invention, the transmission group comprises a first gearwheel (12) which is connected to the first drive member (11) at one end and to the transfer receptacle (9) at the other end, and which is configured to perform a rotational movement with the power provided by the first drive member (11); and at least one second gearwheel (13) which is connected to the first gearwheel (12) so as to perform a rotational movement depending on the rotation of the first gearwheel (12) and connected to the shutter (10) so as to transmit the rotational movement thereof to the shutter (10). In this embodiment, the power provided by the first drive member (11) is transmitted simultaneously to the transfer receptacle (9) and the shutter (10) via the first gearwheel (12) and the second gearwheel (13) so as to enable the transfer receptacle (9) and the shutter (10) to simultaneously move without any issues of synchronization during operation.

In an embodiment of the present invention, the transmission group further comprises at least one shutter arm (14) which is connected to the shutter (10) at at least one part of one end, and which has teeth on a portion of the end opposite to the end connected to the shutter (10); and a third gearwheel (15) which is arranged on the second gearwheel (13) and which has teeth suitable to mesh with the teeth on the shutter arm (14). In this embodiment, by connecting the second gearwheel (13) to the shutter (10) by means of a shutter arm (14) extending between the second gearwheel (13) and the shutter (10) instead of connecting the second gearwheel (13) directly to the shutter (10), the second gearwheel (13) can be made smaller in size, thereby offering structural simplicity and the advantages of reduced weight and cost.

In an embodiment of the present invention, the coffee dosing group (4) further comprises a protrusion (not shown in the figures) which is positioned on the first gearwheel (12), and at least one first switch (16) which is arranged so as to come into contact with the protrusion when the first gearwheel (12) reaches a certain position while the first gearwheel (12) rotates. In this embodiment, the contact between the protrusion and the first switch (16) is detected, for example, by a control unit provided in the coffee maker (1), and thus the full rotation of the first gearwheel (12), and hence the movement of the transfer receptacle (9), to which the first gearwheel (12) is connected, between the first position and the second position, can be detected, and the amount of coffee transferred from the transfer receptacle (9) to the brewing chamber (5) to prepare the number of coffees requested by the user can be controlled in a precise manner.

In an embodiment of the present invention, the coffee dosing group (4) further comprises at least one mixer (17) which is arranged in the coffee receptacle (8) so as to perform a rotational movement around an axis of extension, and a second drive group which is configured to rotate the mixer (17). In this embodiment, when the user makes a coffee brewing request, the mixer (17) is activated by the second drive group, and the coffee, particularly coffee in powdered form such as Turkish coffee, is blended in the coffee receptacle (8) and then filled into the transfer receptacle (9). This also enables an improvement in the accuracy of the amount of coffee filled into the transfer receptacle (9).

In an embodiment of the present invention, the second drive group comprises at least one second drive member (18) which provides the power required to rotate the mixer (17), and at least one holder (19) which is arranged on the second drive member (18) so as to allow for the transmission of the power provided by the second drive member (18) to the mixer (17). In this embodiment, the second drive member (18) is for example an electric motor, and in one version the second drive member (18) begins operating before the first drive member (11) is activated when a coffee request is received from the user and rotates the mixer (17) for a certain period to blend the coffee in the coffee receptacle (8) before being transferred to the transfer receptacle (9). In another version, the second drive member (18) begins operating simultaneously with the first drive member (11) upon a coffee request from the user so as to eliminate the need for additional time to blend the coffee and shorten the coffee transfer time from the coffee dosing group (4) to the brewing chamber (5) and the overall coffee preparation time.

In an embodiment of the present invention, the mixer (17) is removably attached to the holder (19). In this embodiment, when preparing coffee which is not in powdered form, the mixer (17) can be removed from the holder (19) to avoid unnecessary use, and the mixer (17) can also be removed whenever desired for cleaning purposes.

In an embodiment of the present invention, the coffee dosing group (4) further comprises at least one first sensor (20) which is configured to detect the coffee dispensed from the transfer receptacle (9) into the transfer opening (6). In this embodiment, if the first sensor (20) detects that no coffee has been dispensed or that the amount of dispensed coffee is less than required, the user is enabled to be audibly and/or visually alerted, via the audible and/or visual warning means provided on the body (2), that there is not enough coffee in the coffee receptacle (8).

In an embodiment of the present invention, the coffee dosing group (4) further comprises at least one coffee receptacle lid (21) which is connected to the coffee receptacle (8) so as to cover the coffee receptacle (8) to isolate the coffee in the coffee receptacle (8) from the external environment. By means of the said coffee receptacle lid (21), the coffee stored in the coffee receptacle (8) can be preserved for a long time without spoiling, and the entry of dust or dirt from the external environment into the coffee is prevented.

In an embodiment of the present invention, the sugar dosing group (7) comprises a sugar receptacle (22) which stores the sugar therein; a delivery body (23) which is connected to the sugar receptacle (22) so that a portion of the sugar filled into the sugar receptacle (22) accumulates in the vicinity of a first end thereof, and which has a gap provided at a point away from the said first end and opening into the transfer opening (6); and at least one sugar delivery group which is configured to move the amount of sugar selected by the user from near the first end of the delivery body (23) toward the gap near the second end thereof. The sugar is filled into the sugar receptacle (22) by the user. By the effect of gravity, a certain portion of the sugar filled into the sugar receptacle (22) accumulates in the vicinity of the first end of the delivery body (23) which is located just beneath the sugar receptacle (22). Based on the sugar amount requested by the user via an input unit provided on the body (2), the sugar delivery group moves to transfer the appropriate amount of sugar from the sugar near the first end of the delivery body (23) to the second end of the delivery body (23), and the transferred sugar is then sent through the gap to the transfer opening (6), and from there to the brewing chamber (5). In an example, when a request is made by the user for mildly sweet Turkish coffee, one unit of sugar required for preparing mildly sweet Turkish coffee is transferred from the first end to the second end of the delivery body (23) by the movement of the sugar delivery group and is delivered to the transfer opening (6) through the gap aligned with the transfer opening (6), and from there to the brewing chamber (5). In another example, when a request is made by the user for moderately sweet Turkish coffee, two units of sugar required for preparing mildly sweet Turkish coffee are transferred from the first end to the second end of the delivery body (23) by the movement of the sugar delivery group and is delivered to the transfer opening (6) through the gap aligned with the transfer opening (6), and from there to the brewing chamber (5). Depending on the movement of the sugar delivery group provided in the sugar dosing group (7), the amount of sugar corresponding to the sugar level of the coffee desired to be brewed by the user is transferred from the first end to the second end of the delivery body (23) and delivered to the brewing chamber (5) with high precision. Thus, the coffee with the desired sugar level requested by the user is brewed, enhancing user satisfaction.

In an embodiment of the present invention, the sugar delivery group comprises a shaft (24) which extends linearly in the delivery body (23) from approximately the first end of the delivery body (23) to approximately the second end and has protrusions arranged thereon to form a helical structure; a third drive member (25) which provides the necessary force for rotating the shaft (24) around its axis of extension; and at least one bearing member (26) which enables one end of the shaft (24) to be borne to the third drive member (25) such that the shaft (24) is enabled to perform a rotational movement around its axis of extension by the force provided by the third drive member (25). In this embodiment, by means of the power provided by the third drive member (25) such as an electric motor, the said shaft (24) performs a simple rotational motion around its longitudinal axis, and by means of the protrusions arranged in a helical structure on the shaft (24), the sugar located near the first end of the delivery body (23) is transferred toward the second end of the delivery body (23) and then delivered to the brewing chamber (5) through the transfer opening (6).

In an embodiment of the present invention, the sugar dosing group (7) further comprises a protrusion which is positioned on the bearing member (26), and at least one second switch (27) which is arranged so as to come into contact with the protrusion when the first bearing member (26) reaches a certain position while the shaft (24) is rotating. In this embodiment, the contact of the protrusion with the second switch (27) is detected, for instance, by a control unit provided in the coffee machine (1), and one full rotation of the bearing member (26), and hence one full rotation of the shaft (24) coupled to the bearing member (26) can be detected so as to allow the precise control of the amount of sugar delivered from the delivery body (23) to the brewing chamber (5) in accordance with the amount requested by the user. In an example, when a request is made by the user for mildly sweet Turkish coffee, one unit of sugar required for preparing mildly sweet Turkish coffee is transferred from the first end to the second end of the delivery body (23) by one full rotation of the shaft (24) and is delivered to the transfer opening (6) through the gap aligned with the transfer opening (6), and from there to the brewing chamber (5). In another example, when a request is made by the user for moderately sweet Turkish coffee, two units of sugar required for preparing mildly sweet Turkish coffee are transferred from the first end to the second end of the delivery body (23) by two full rotations of the shaft (24) and is delivered to the transfer opening (6) through the gap aligned with the transfer opening (6), and from there to the brewing chamber (5).

In an embodiment of the present invention, the sugar dosing group (7) further comprises at least one second sensor (28) which is configured to detect the amount of sugar in the sugar receptacle (22). In this embodiment, if the second sensor (28) detects that the amount of sugar in the sugar receptacle (22) is below a predetermined amount, the user is audibly and/or visually alerted, by means of the audible and/or visual warning means arranged on the body (2), that there is not enough sugar in the sugar receptacle (22).

In an embodiment of the present invention, the sugar dosing group (7) further comprises at least one sugar receptacle lid which is connected to the sugar receptacle (22) so as to cover the sugar receptacle (22) to isolate the sugar in the sugar receptacle (22) from the external environment. By means of the said sugar receptacle lid, the sugar stored in the sugar receptacle (22) can be preserved for a long time without spoiling, and the entry of dust or dirt from the external environment into the sugar is prevented.

In an embodiment of the present invention, the coffee maker (1) is a Turkish coffee maker.

By means of the present invention, a coffee maker (1) is realized, which improves user satisfaction by ensuring the automatic transfer of the amount of coffee corresponding to the number of cups selected by the user and the amount of sugar corresponding to the sugar ratio selected by the user to the brewing chamber (5) via a coffee dosing group (4) and a sugar dosing group (7).

## Claims

1. A coffee maker (1) **comprising** a body (2); a dosing compartment (3) which is provided in the body (2); a coffee dosing group (4) which is provided in the dosing compartment (3) and which is configured to store coffee and to dose the appropriate amount of coffee depending on the user's selection; a brewing chamber (5) which is provided in the body (2) and wherein the brewing process is performed; and a transfer opening (6) which enables the foodstuff transfer between the coffee dosing group (4) and the brewing chamber (5), **characterized by** a sugar dosing group (7) which is provided in the dosing compartment (3) and which is configured to store sugar and to dose the amount of sugar specified by the user to the brewing chamber (5) through the transfer opening (6).

2. A coffee maker (1) as in Claim 1, **characterized by** the coffee dosing group (4) comprising a coffee receptacle (8) which stores the coffee therein; a transfer receptacle (9) which faces the coffee receptacle (8) in a first position and the transfer opening (6) in a second position and which is capable of holding a certain amount of coffee therein; a shutter (10) which can move between an open position which allows the coffee in the transfer receptacle (9) to pass to the transfer opening (6), and a closed position which prevents the coffee in the transfer receptacle (9) from passing to the transfer opening (6); and a first drive group which is configured to move the transfer receptacle (9) between the first position and the second position, and the shutter (10) between the closed position and the open position.

3. A coffee maker (1) as in Claim 2, **characterized by** the first drive group comprising at least one first drive member (11) which provides the power required for the respective movements of the transfer receptacle (9) and the shutter (10), and at least one transmission group which transmits the power provided by the first drive member (11) to the transfer receptacle (9) and the shutter (10).

4. A coffee maker (1) as in Claim 3, **characterized by** the transmission group comprising a first gearwheel (12) which is connected to the first drive member (11) at one end and to the transfer receptacle (9) at the other end, and which is configured to perform a rotational movement with the power provided by the first drive member (11); and at least one second gearwheel (13) which is connected to the first gearwheel (12) so as to perform a rotational movement depending on the rotation of the first gearwheel (12) and connected to the shutter (10) so as to transmit the rotational movement thereof to the shutter (10).

5. A coffee maker (1) as in Claim 4, **characterized by** the transmission group comprising at least one shutter arm (14) which is connected to the shutter (10) at at least one part of one end, and which has teeth on a portion of the end opposite to the end connected to the shutter (10); and a third gearwheel (15) which is arranged on the second gearwheel (13) and which has teeth suitable to mesh with the teeth on the shutter arm (14).

6. A coffee maker (1) as in Claim 4 or 5, **characterized by** the coffee dosing group (4) comprising a protrusion which is positioned on the first gearwheel (12), and at least one first switch (16) which is arranged so as to come into contact with the protrusion when the first gearwheel (12) reaches a certain position while the first gearwheel (12) rotates.

7. A coffee maker (1) as in any one of Claims 1 to 6, **characterized by** the coffee dosing group (4) comprising at least one mixer (17) which is arranged in the coffee receptacle (8) so as to perform a rotational movement around an axis of extension, and a second drive group which is configured to rotate the mixer (17).

8. A coffee maker (1) as in Claim 7, **characterized by** the second drive group comprising at least one second drive member (18) which provides the power required to rotate the mixer (17), and at least one holder (19) which is arranged on the second drive member (18) so as to allow for the transmission of the power provided by the second drive member (18) to the mixer (17).

9. A coffee maker (1) as in Claim 8, **characterized by** the mixer (18) which is removably attached to the holder (19).

10. A coffee maker (1) as in any one of Claims 2 to 9, **characterized by** the coffee dosing group (4) comprising at least one first sensor (20) which is configured to detect the coffee dispensed from the transfer receptacle (9) into the transfer opening (6).

11. A coffee maker (1) as in any one of Claims 1 to 10, **characterized by** the coffee dosing group (4) comprising at least one coffee receptacle lid (21) which is connected to the coffee receptacle (8) so as to cover the coffee receptacle (8) to isolate the coffee in the coffee receptacle (8) from the external environment.

12. A coffee maker (1) as in any one of Claims 1 to 11, **characterized by** the sugar dosing group (7) comprising a sugar receptacle (22) which stores the sugar therein; a delivery body (23) which is connected to the sugar receptacle (22) so that a portion of the sugar filled into the sugar receptacle (22) accumulates in the vicinity of a first end thereof, and which has a gap provided at a point away from the said first end and opening into the transfer opening (6); and at least one sugar delivery group which is configured to move the amount of sugar selected by the user from near the first end of the delivery body (23) toward the gap near the second end thereof.

13. A coffee maker (1) as in Claim 12, **characterized by** the sugar delivery group comprising a shaft (24) which extends linearly in the delivery body (23) from approximately the first end of the delivery body (23) to approximately the second end and has protrusions arranged thereon to form a helical structure; a third drive member (25) which provides the necessary force for rotating the shaft (24) around its axis of extension; and at least one bearing member (26) which enables one end of the shaft (24) to be borne to the third drive member (25) such that the shaft (24) is enabled to perform a rotational movement around its axis of extension by the force provided by the third drive member (25).

14. A coffee maker (1) as in Claim 13, **characterized by** the sugar dosing group (7) comprising a protrusion which is positioned on the bearing member (26), and at least one second switch (27) which is arranged so as to come into contact with the protrusion when the first bearing member (26) reaches a certain position while the shaft (24) is rotating.

15. A coffee maker (1) as in any one of Claims 12 to 14, **characterized by** at least one second sensor (28) which is configured to detect the amount of sugar in the sugar receptacle (22).
